(19) Europäisches Patentamt
European Patent Office
Office européen des brevets

(11) **EP 3 740 779 B1**

(12) **EUROPÄISCHE PATENTSCHRIFT**

(45) Veröffentlichungstag und Bekanntmachung des Hinweises auf die Patenterteilung:
**05.01.2022** Patentblatt **2022/01**

(51) Int Cl.:
*G01S 7/40* (2006.01)  *G01S 13/42* (2006.01)
*G01S 13/87* (2006.01)  *H04B 7/0413* (2017.01)
*G01S 13/00* (2006.01)  *G01S 13/02* (2006.01)
*G01S 13/931* (2020.01)

(21) Anmeldenummer: **18804289.9**

(22) Anmeldetag: **15.11.2018**

(86) Internationale Anmeldenummer:
**PCT/EP2018/081480**

(87) Internationale Veröffentlichungsnummer:
**WO 2019/141406 (25.07.2019 Gazette 2019/30)**

(54) **RADARVORRICHTUNG UND VERFAHREN ZUM BETREIBEN EINER RADARVORRICHTUNG**

RADAR DEVICE AND METHOD FOR OPERATING A RADAR DEVICE

DISPOSITIF RADAR ET PROCÉDÉ POUR FAIRE FONCTIONNER UN DISPOSITIF RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.01.2018 DE 102018200751**

(43) Veröffentlichungstag der Anmeldung:
**25.11.2020** Patentblatt **2020/48**

(73) Patentinhaber: **Robert Bosch GmbH**
**70442 Stuttgart (DE)**

(72) Erfinder:
• **LOESCH, Benedikt**
**70195 Stuttgart (DE)**
• **GROSS, Volker**
**71254 Ditzingen (DE)**

(56) Entgegenhaltungen:
**DE-A1-102014 219 113**  **US-A1- 2012 154 206**

• **GUETLEIN JOHANNA ET AL: "Calibration strategy for a TDM FMCW MIMO radar system", 2013 IEEE INTERNATIONAL CONFERENCE ON MICROWAVES, COMMUNICATIONS, ANTENNAS AND ELECTRONIC SYSTEMS (COMCAS 2013), IEEE, 21. Oktober 2013 (2013-10-21), Seiten 1-5, XP032533309, DOI: 10.1109/COMCAS.2013.6685266 [gefunden am 2013-12-16]**

**Beschreibung**

Die vorliegende Erfindung betrifft eine Radarvorrichtung und ein Verfahren zum Betreiben einer Radarvorrichtung. Die Erfindung betrifft insbesondere eine Multiple-Input-Multiple-Output (MIMO)-Radarvorrichtung.

Stand der Technik

Fahrerassistenzsysteme können anhand von mittels einer Radarvorrichtung erfassten Umfelddaten die Abstände und Relativgeschwindigkeiten von Objekten berechnen. Von besonderer Bedeutung sind jedoch auch der Azimutwinkel und der Elevationswinkel des Objekts, etwa um eine Fahrspurzuordnung durchzuführen oder die Relevanz des Ziels zu bestimmen. Beispielsweise kann anhand des Elevationswinkels bestimmt werden, ob das Objekt überfahrbar, gegenfahrbar oder unterfahrbar ist. Die Azimut- und Elevationswinkel der Objekte können aus Amplituden- und/oder Phasenunterschieden von Radarsignalen ermittelt werden.

Bei sogenannten Multiple-Input-Multiple-Output (MIMO)-Radarvorrichtungen werden im Gegensatz zu konventionellen Radarvorrichtungen mehrere Sendeantennen und Empfangsantennen eingesetzt. Dadurch können die virtuelle Apertur des Gesamtarrays und die Anzahl der Messungen vergrößert werden, und Kosten für zusätzliche Kanäle sowie Platz auf der Platine können eingespart werden.

Die Sendesignale der Radarvorrichtung müssen orthogonal zueinander sein, was durch Codemultiplex-, Frequenzmultiplex- oder Zeitmultiplexverfahren erreicht werden kann.

Aus der US 20170131392 A1 ist ein MIMO-Radarsensor bekannt, wobei in einem FMCW-Modulationsverfahren in verschachtelter Weise Frequenzrampen ausgesendet werden und die Reflexionen empfangen werden. Der Radarsensor erleichtert die Bestimmung der Winkelposition eines Objekts.

Das Dokument DE 102014219113 A1 offenbart eine MIMO-Radarvorrichtung, die insbesondere in einem Fahrzeug angeordnet sein kann.

Um eine gewünschte hohe Genauigkeit der Winkelbestimmung zu erreichen, müssen Amplituden- sowie Phasendifferenzen bzw. -versätze möglichst genau bekannt sein bzw. eliminiert werden. Derartige Versätze können etwa aufgrund von effektiven Leitungslängen unterschieden entstehen, d. h. etwa aufgrund tatsächlich verschieden langer Leitungen oder aufgrund von Temperaturunterschieden in den verschiedenen Leitern.

Offenbarung der Erfindung

Die Erfindung stellt eine Radarvorrichtung mit den Merkmalen des Patentanspruchs 1 und ein Verfahren mit den Merkmalen des Patentanspruchs 9 bereit.

Gemäß einem ersten Aspekt betrifft die Erfindung demnach eine Radarvorrichtung mit einer Vielzahl von Sendeeinrichtungen, welche dazu ausgebildet sind, Radarwellen auszusenden, und einer Vielzahl von Empfängereinrichtungen, welche dazu ausgebildet sind, die reflektierten Radarwellen zu empfangen und ein jeweiliges Radarsignal auszugeben. Die Sendeeinrichtungen und Empfängereinrichtungen sind in einem Array mit horizontalen Zeilen und vertikalen Spalten angeordnet. Dem Array ist ein entsprechendes virtuelles Array zugeordnet. Die Anordnung des Arrays ist derart gestaltet, dass ein Teilarray des virtuellen Arrays, welches einer beliebigen ersten Sendeeinrichtung zugeordnet ist, mindestens ein erstes virtuelles Element aufweist, welches dieselbe horizontale Position und eine unterschiedliche vertikale Position aufweist wie mindestens ein zugeordnetes zweites virtuelles Element eines weiteren Teilarrays, welches einer zweiten Sendeeinrichtung zugeordnet ist. Dem ersten virtuellen Element ist eine erste Empfängereinrichtung zugeordnet und dem zweiten virtuellen Element ist eine zweite Empfängereinrichtung zugeordnet. Die Radarvorrichtung umfasst weiter eine Steuereinrichtung, welche für eine beliebige erste Sendeeinrichtung einen Phasenversatz zur entsprechenden zweiten Sendeeinrichtung bestimmt. Die Steuereinrichtung verwendet hierzu ein erstes Radarsignal, welches einer von der ersten Sendeeinrichtung ausgesendeten und von der zugeordneten ersten Empfängereinrichtung empfangenen ersten Radarwelle entspricht. Die Steuereinrichtung verwendet weiter ein zweites Radarsignal, welches einer von der zweiten Sendeeinrichtung ausgesendeten und von der zugeordneten zweiten Empfängereinrichtung empfangenen zweiten Radarwelle entspricht.

Gemäß einem zweiten Aspekt betrifft die Erfindung demnach ein Verfahren zum Betreiben einer Radarvorrichtung, wobei für eine beliebige erste Sendeeinrichtung ein Phasenversatz zur entsprechenden zweiten Sendeeinrichtung bestimmt wird.

Bevorzugte Ausführungsformen sind Gegenstand der jeweiligen Unteransprüche.

Vorteile der Erfindung

Die zugrundeliegende Idee der Erfindung besteht darin, eine Anordnung der Radarelemente zu finden, welche die Ermittlung der Phasenversätze zwischen einzelnen Sendeeinrichtungen ermöglicht. Dies wird dadurch erreicht, dass im virtuellen Array zwei virtuelle Elemente, welche verschiedenen Sendeeinrichtungen zugeordnet sind, die identische horizontale Position aufweisen. Dies bedeutet, dass die Phasendifferenzen bzw. -versätze von Radarwellen zwischen diesen beiden virtuellen Antennenelementen nicht vom Azimutwinkel des Objektes abhängen. Unter der Annahme, dass die Reflexionen an den Objekten im Mittel auf Sensorhöhe erfolgen, hängen die gesamten Phasendifferenzen somit im Wesentlichen nur noch vom Phasenversatz zwischen den Sendeeinrichtungen bzw. Empfängereinrichtungen ab. Unter dem Phasenversatz ist die bereits bei identischer Ansteuerung aufgrund unterschiedlicher effektiver Leitungslängenunterschiede vorhandene un-terschiedliche Phase verschiedener Sendeeinrichtun-gen bzw. Empfängereinrichtungen zu verstehen. Da der empfangseitige Phasengleichlauf typischerweise gut kontrolliert werden kann, verbleiben lediglich die Phasenversätze zwischen den Sendeeinrichtungen. Diese können somit gemessen und kompensiert werden.

Zusätzlich ist aufgrund der unterschiedlichen vertikalen Positionen eine Bestimmung des Elevationswinkels durch die Radarvorrichtung möglich. Die Winkelposition eines Objekts kann dadurch vollständig bestimmt werden.

Gemäß einer bevorzugten Weiterbildung der Radarvorrichtung ist die Steuereinrichtung weiter dazu ausgebildet, anhand der bestimmten Phasenversätze zwischen zwei Sendeeinrichtungen und die Sendeeinrichtungen derart anzusteuern, dass Phasengleichlauf erzielt wird. Besonders vorteilhaft ist hierzu kein zusätzlicher Hardwareaufwand möglich, sondern rein durch Signalverarbeitung eine günstige Anordnung der Antennenelemente kann bereits Phasengleichlauf auf Sendeseite erreicht werden.

Gemäß einer bevorzugten Weiterbildung weist die Radarvorrichtung eine Auswerteeinrichtung auf, welche anhand der von den Empfängereinrichtungen ausgegebenen Radarsignale ein Objekt detektiert und einen Azimutwinkel und/oder Elevationswinkel des Objekts ermittelt. Aufgrund der bekannten Phasenversätze kann die Winkellage des Objekts exakt bestimmt werden.

Gemäß einer bevorzugten Weiterbildung der Radarvorrichtung bestimmt die Steuereinrichtung den Phasenversatz zwischen zwei Sendeeinrichtungen weiter unter Verwendung eines vertikalen Dejustagewinkels der Radarvorrichtung. Der vertikale Dejustagewinkel kann ein fest vorgegebener Wert sein, welcher die exakte vertikale Ausrichtung der in ein Fahrzeug eingebauten Radarvorrichtung beschreibt. Um die Radarvorrichtung für unterschiedliche Ausrichtungen verwenden zu können, kann der Dejustagewinkels auch ein frei vorgebbarer Parameter sein, welcher in Abhängigkeit der genauen Justage eingestellt werden kann.

Gemäß einer bevorzugten Weiterbildung weist die Radarvorrichtung einen Beschleunigungssensor auf, welcher die Beschleunigung der Radarvorrichtung misst. Die Steuereinrichtung bestimmt den vertikalen Dejustagewinkel unter Verwendung der gemessenen Beschleunigung. Da die Beschleunigung der Radarvorrichtung von dem genauen vertikalen Dejustagewinkel abhängt, kann der Dejustagewinkel somit ohne Kenntnis der genauen Justage bestimmt werden.

Gemäß einigen Ausführungsformen können die Phasenversätze zwischen den Empfängereinrichtungen vernachlässigt werden. Gemäß weiterer Ausführungsformen kann die Steuereinrichtung jedoch auch dazu ausgebildet sein, einen Phasenversatz zwischen zwei Sendeeinrichtungen unter Verwendung eines Phasenversatzes zwischen den zwei zugeordneten Empfängereinrichtungen zu bestimmen. Während die Ermittlung der Phasenversätze auf Sendeseite typischerweise schwierig ist, ist die Ermittlung der Phasenversätze auf Empfängerseite meist gut kontrollierbar und einstellbar.

Gemäß einer bevorzugten Weiterbildung der Radarvorrichtung ist die Steuereinrichtung dazu ausge-bildet, die Sendeeinrichtungen und Empfängereinrich-tungen in einem

Zeitmultiplex-Verfahren anzusteuern. Insbesondere können in einem Frequencymodulated-continuous-wave (FMCW)- Verfahren Frequenzrampen abwechselnd von den verschiedenen Sendeeinrichtungen ausgesendet werden. Insbesondere können die einzelnen Sendeeinrichtungen und Empfängereinrichtungen nach dem in der US 20170131392 A1 beschriebenen Verfahren angesteuert werden.

Gemäß einer bevorzugten Weiterbildung der Radarvorrichtung unterscheiden sich sowohl die vertikalen Positionen der Sendeeinrichtungen als auch die ver-tikalen Positionen der Empfängereinrichtungen zumin-dest teilweise voneinander. Dadurch kann eine bessere Bestimmung von Azimutwinkel und Elevationswinkel durchgeführt werden.

Kurze Beschreibung der Zeichnungen

Es zeigen:

Figur 1   ein schematisches Blockschaltbild einer Ra-darvorrichtung gemäß einer Ausführungs-form der Erfindung;

Figur 2   eine schematische Draufsicht auf ein Array mit Sendeeinrichtungen und Empfängereinrichtungen einer Radarvorrichtung;

Figur 3   ein dem Array zugeordnetes virtuelles Array; und

Figur 4   ein Flussdiagramm eines Verfahrens zum Betreiben einer Radarvorrichtung.

Beschreibung der Ausführungsbeispiele

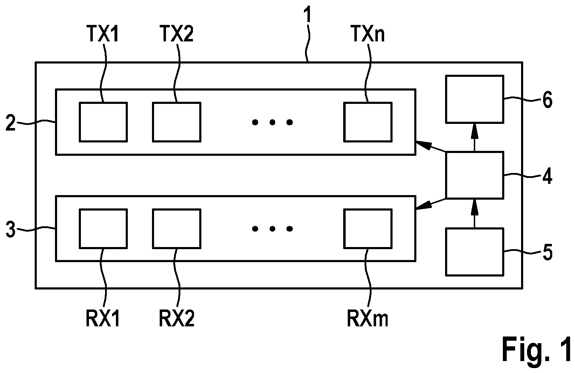

Figur 1 zeigt ein schematisches Blockschaltbild einer Radarvorrichtung 1 gemäß einer Ausführungsform der Erfindung. Die Radarvorrichtung 1 kann insbesondere in einem Fahrzeug angeordnet werden.

Die Radarvorrichtung 1 umfasst eine monolithisch integrierte Schaltung (MMIC), mit einem Sendeabschnitt 2 und einem Empfängerabschnitt 3. Die Radarvorrichtung 1 ist als MIMO-Radarvorrichtung ausgebildet, d. h. der Sendeabschnitt 2 umfasst eine Vielzahl von Sendeeinrichtungen TX1 bis TXn, während der Empfängerabschnitt 3 eine Vielzahl von Empfängereinrichtungen RX1 bis RXm umfasst, wobei n und m jeweils größer oder gleich zwei sind. Die Anzahl der Sendeeinrichtungen TX1 bis TXn kann der Anzahl der Empfängereinrichtungen RX1 bis RXm entsprechen, jedoch auch von dieser verschieden sein.

Eine Steuervorrichtung 4 ist dazu ausgebildet, die Sendeeinrichtungen TX1 bis TXn und Empfängereinrichtungen RX1 bis RXm anzusteuern, etwa in Form eines Zeitmultiplex-Verfahrens. Die Sendeeinrichtungen TX1 bis TXn und Empfängereinrichtungen RX1 bis RXm sind in einem Array angeordnet, welches horizontale Zeilen und vertikalen Spalten aufweist. Unter einer arrayförmigen Anordnung ist zu verstehen, dass die Sendeeinrichtungen TX1 bis TXn und Empfängereinrichtungen RX1 bis RXm an einem Gitter ausgerichtet sind. Die horizontalen Spalten sind parallel zur Fahrbahn des Fahrzeugs ausgerichtet, während die vertikale Richtung senkrecht zur Fahrbahn ausgerichtet sein kann. Allgemeiner kann die vertikale Richtung auch relativ zu dieser senkrechten Richtung verdreht angeordnet sein, wobei ein Dejustagewinkel eingeschlossen wird. Die Radarvorrichtung 1 kann hierzu einen Beschleunigungssensor 5 aufweisen, welche die Beschleunigung der Radarvorrichtung 1 misst und daraus den Dejustagewinkel extrahiert und an die Steuereinrichtung 4 überträgt.

Die Radarvorrichtung 1 weist weiter eine Auswerteeinrichtung 6 auf, welche von den Empfängereinrichtungen RX1 bis RXm ausgegebene Radarsignale auswertet, etwa um Objekte zu detektieren. Die Auswerteeinrichtung 6 kann einen Abstand, eine Relativgeschwindigkeit, einen Azimutwinkel und/oder einen Elevationswinkel des Objekts anhand der Radarsignale berechnen.

Die Radarvorrichtung 1 zeichnet sich durch die relative Anordnung von den Empfängereinrichtungen RX1 bis RXm und den Sendeeinrichtungen TX1 bis TXn relativ zueinander aus. Im Folgenden soll dies anhand eines Beispiels erläutert werden.

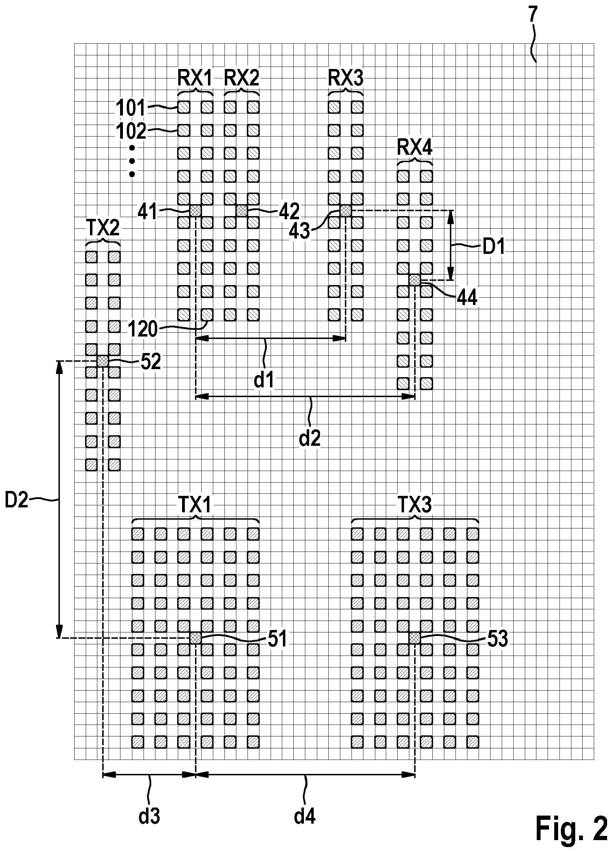

Figur 2 zeigt hierzu drei Sendeeinrichtungen TX1 bis TX3 sowie vier Empfängereinrichtungen RX1 bis RX4, welche in einem Array 7 angeordnet sind. Das Array 7 weist eine Vielzahl von Zeilen und Spalten auf, wobei an bestimmten Positionen Einzelstrahler der Sendeeinrichtungen bzw. Empfängereinrichtungen RX1 bis RX4 angeordnet sind. Beispielhaft sind die Einzelstrahler 101 bis 120 der ersten Empfängereinrichtung RX1 gekennzeichnet. Die Sendeeinrichtungen TX1 bis TX3 bzw. Empfängereinrichtungen RX1 bis RX4 können somit jeweils als Phased-Array-Antenne ausgebildet sein. Den jeweiligen Sendeeinrichtungen TX1 bis TX3 bzw.

Empfängereinrichtungen RX1 bis RX4 können entsprechende Phasenzentren 51 bis 53 bzw. 41 bis 44 zugeordnet werden, welche einem Zentrum der jeweiligen Einzelstrahler entsprechen.

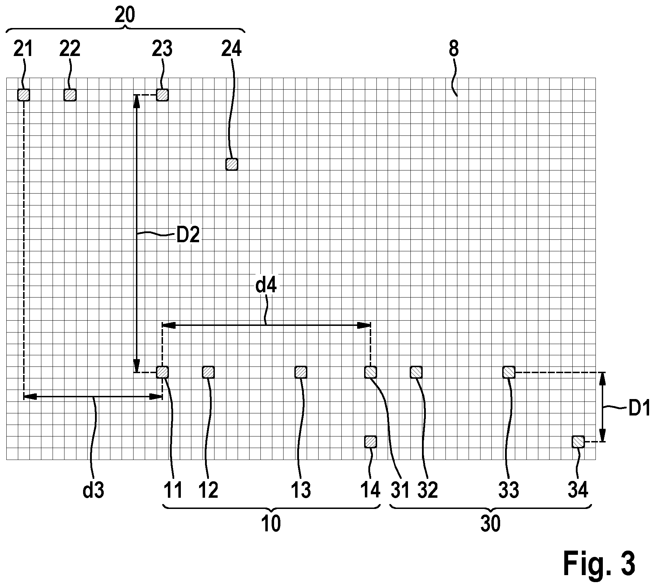

Dem Array 7 mit den Sendeeinrichtungen TX1 bis TX3 und Empfängereinrichtungen RX1 bis RX4 entspricht ein in Figur 3 illustriertes virtuelles Array 8, welches durch Faltung der Phasenzentren 41 bis 44 der Empfängereinrichtungen RX1 bis RX4 mit den Phasenzentren 51 bis 53 der Sendeeinrichtungen TX1 bis TX3 erhalten wird. Dies entspricht mathematisch einem Kroneckerprodukt von den Phasenzentren entsprechenden Vektoren der Sendeeinrichtungen TX1 bis TX3 bzw. Empfängereinrichtungen RX1 bis RX4.

Der ersten Sendeeinrichtung TX1 entspricht ein erstes virtuelles Teilarray 10, der zweiten Sendeeinrichtung TX2 entspricht ein zweites virtuelles Teilarray 20 und der dritten Sendeeinrichtung TX3 entspricht ein drittes virtuelles Teilarray 30. Jedes der Teilarrays 10, 20, 30 weist eine Anzahl von virtuellen Elementen 11 bis 14, 21 bis 24 und 31 bis 34 auf, welche der Anzahl der Empfängereinrichtungen RX1 bis RX4 entspricht, also gleich vier ist. Jedem virtuellen Element kann somit auch eine Empfängereinrichtung RX1 bis RX4 zugeordnet werden.

Die Abstände zwischen virtuellen Elementen eines vorgegebenen Teilarrays 8 entsprechen gerade den Abständen zwischen den Empfängereinrichtungen RX1 bis RX4. Weiter entsprechen die Abstände zwischen virtuellen Elementen verschiedener Teilarrays, welche derselben Empfängereinrichtung RX1 bis RX4 zugeordnet sind, den Abständen zwischen den zugeordneten Sendeeinrichtungen TX1 bis TX3.

Die Sendeeinrichtungen TX1 bis TX3 und Empfängereinrichtungen RX1 bis RX4 werden derart angeordnet, dass jedes Teilarray ein virtuelles Element umfasst, welches dieselbe horizontale Position und eine unterschiedliche vertikale Position aufweist wie mindestens ein und vorzugsweise genau ein weiteres virtuelles Element eines weiteren Teilarrays.

In dem in Figur 2 gezeigten Aufbau entspricht beispielsweise ein erster horizontaler Abstand d1 zwischen dem Phasenzentrum 41 der ersten Empfängereinrichtung RX1 und dem Phasenzentrum 43 der dritten Empfängereinrichtung RX3 gerade einem dritten horizontalen Abstand d3 zwischen dem Phasenzentrum 52 der zweiten Sendeeinrichtung TX2 und dem Phasenzentrum 51 der ersten Sendeeinrichtung TX1. Weiter entspricht ein zweiter horizontaler Abstand d2 zwischen dem Phasenzentrum 41 der ersten Empfängereinrichtung RX1 und dem Phasenzentrum 44 der vierten Empfängereinrichtung RX4 gerade einem vierten horizontalen Abstand d4 zwischen dem Phasenzentrum 51 der ersten Sendeeinrichtung TX1 und dem Phasenzentrum 53 der dritten Sendeeinrichtung TX3. Weiter befinden sich die erste bis dritte Empfängereinrichtung RX1 bis RX3 an derselben vertikalen Position, während die vierte Empfängereinrichtung RX4 einen ersten vertikalen Abstand D1 hierzu aufweist. Die erste Sendeeinrichtung TX1 und die dritte Sendeeinrichtung TX3 befinden sich an derselben vertikalen Position, während die zweite Sendeeinrichtung TX2 einen zweiten vertikalen Abstand D2 von der ersten Sendeeinrichtung TX1 und der dritten Sendeeinrichtung TX3 aufweist.

Dieser Aufbau bewirkt, dass in dem virtuellen Array 8 ein virtuelles Element 23 des zweiten Teilarrays 20, welches der zweiten Sendeeinrichtung TX2 und der dritten Empfängereinrichtung RX3 zugeordnet ist, dieselbe horizontale Position und einen vertikalen Abstand gleich dem zweiten vertikalen Abstand D2 von einem virtuellen Element 11 des ersten Teilarrays 10 aufweist, welches der ersten Sendeeinrichtung TX1 und der ersten Empfängereinrichtung RX1 zugeordnet ist.

Genauso weist ein virtuelles Element 31 des dritten Teilarrays 30, welches der dritten Sendeeinrichtung TX3 und der ersten Empfängereinrichtung RX1 zugeordnet ist, dieselbe horizontale Position und eine um den ersten vertikalen Abstand D1 versetzte vertikale Position auf wie ein virtuelles Element 14 des ersten Teilarrays 10, welches der ersten Sendeeinrichtung TX1 und der vierten Empfängereinrichtung RX4 zugeordnet ist.

Die virtuellen Elemente 11 und 23 verknüpfen somit in gewisser Weise das erste Teilarray 10 mit dem zweiten Teilarray 20 und die virtuellen Elemente 14 und 31 Verknüpfen das erste Teilarray 10 mit dem dritten Teilarray 30.

Für jeweils zwei virtuelle Elemente, welche sich an derselben horizontalen Position befinden, kann die Steuereinrichtung 4 die Phasenversätze der zugeordneten Sendeeinrichtungen TX1 bis TXn berechnen.

Allgemein lässt sich der mittlere Phasenversatz:

$$\overline{\Delta\phi}$$

darstellen als Summe eines Phasenversatzes aufgrund des Dejustagewinkels:

$$\Delta\phi_{dej}$$

mit einem Phasenversatz der zugeordneten Sendeeinrichtungen TX1 bis TXn:

$$\Delta\phi_{tx}$$

sowie einem Phasenversatz der zugeordneten Empfängereinrichtungen RX1 bis RXm:

$$\Delta\phi_{rx}$$

Somit gilt:

$$\overline{\Delta\phi} = \Delta\phi_{dej} + \Delta\phi_{rx} + \Delta\phi_{tx}.$$

Diese Gleichung lässt sich nach dem Phasenversatz der Sendeeinrichtungen TX1 bis TXn auflösen:

$$\Delta\phi_{tx} = \overline{\Delta\phi} - \Delta\phi_{dej} - \Delta\phi_{rx}$$

Der Dejustagewinkel bzw. der Phasenversatz aufgrund des Dejustagewinkels kann ein vorgegebener Wert sein, welcher auf einem Speicher der Radarvorrichtung 1 abgelegt sein kann. Alternativ kann der Dejustagewinkel bzw. der Phasenversatz aufgrund des Dejustagewinkels mittels des Beschleunigungssensors 5 bestimmt werden. Weiter kann der Dejustagewinkel mithilfe der Phasendifferenz zwischen zwei weiteren Sendeeinrichtungen TX1 bis TXn bestimmt werden.

Der Phasenversatz der Empfängereinrichtungen RX1 bis RXm kann in erster Näherung vernachlässigt werden. Gemäß weiteren Ausführungsformen kann der Phasenversatz der Empfängereinrichtungen RX1 bis RXm auf andere Art und Weise bestimmt werden. Der mittlere Phasenversatz kann dann durch Ansteuern der jeweiligen Paare von Sendeeinrichtungen TX1 bis TXn und zugeordneter Empfängereinrichtung RX1 bis RXm bestimmt werden. Die Sendeeinrichtung TX1 bis TXn des ersten Paars sendet demnach eine erste Radarwelle aus, welche von der Empfängereinrichtung RX1 bis RXm des ersten Paars empfangen wird, wobei ein entsprechendes erstes Radarsignal ausgegeben wird. Weiter sendet die Sendeeinrichtung TX2 bis TXn des zweiten Paars eine zweite Radarwelle aus, welche von der Empfängereinrichtung RX1 bis RXm des zweiten Paars empfangen wird, wobei eine zweites Radarsignal ausgegeben wird. Der mittlere Phasenversatz entspricht der Phasendifferenz zwischen dem ersten und zweiten Radarsignal.

Durch Einsetzen der Werte kann die Steuereinrichtung 4 nach obiger Formel den Phasenversatz zwischen den Sendeeinrichtungen TX1 bis TXn berechnen.

Die Phasenversätze können allgemeiner noch durch die Objektbewegung beeinflusst werden. Ein dadurch hervorgerufener Phasenversatz kann jedoch von der Steuereinrichtung 4 durch Modulationsverfahren bzw. über Tracking des Objekts kompensiert werden.

Auf die beschriebene Art und Weise kann die Steuereinrichtung 4 somit den Phasenversatz zwischen der ersten Sendeeinrichtung TX1 und der zweiten Sendeeinrichtung TX2 sowie den Phasenversatz zwischen der ersten Sendeeinrichtung TX1 und der dritten Sendeeinrichtung TX3 berechnen. Durch Differenzbildung kann dadurch auch der Phasenversatz zwischen der zweite Sendeeinrichtung TX2 und der dritten Sendeeinrichtung TX3 berechnet werden.

Die Steuereinrichtung 4 ist dazu ausgebildet, anhand der berechneten Phasenversätze die Ansteuersignale der Sendeeinrichtungen TX1 bis TXn bzw. Empfängereinrichtungen RX1 bis RXm derart anzupassen, dass Phasengleichlauf erzielt wird.

Vorzugsweise sind sämtliche Sendeeinrichtungen TX1 bis TXn durch Ketten verknüpfter virtueller Elemente miteinander verbunden, sodass die Phasenversätze zwischen zwei beliebigen Sendeeinrichtungen TX1 bis TXn berechnet werden können. Die Erfindung ist insbesondere nicht auf drei Sendeeinrichtungen TX1 bis TX3 und vier Empfängereinrichtungen RX1 bis RX4 beschränkt.

Gemäß weiteren Ausführungsformen können die Charakteristiken der Sendeeinrichtungen TX1 bis TXn bzw. Empfängereinrichtungen RX1 bis RXm sowie deren genaue Positionierung in dem Array 7 an die jeweilige Anwendung angepasst werden. Beispielsweise kann ein Front-Sensor mit einer höheren Reichweite und einem vorgegebenen Sichtbereich realisiert werden, indem beispielsweise die zweite Sendeeinrichtung TX2 als fokussierende Antenne ausgestaltet wird. Weiter können beispielsweise sämtliche Sendeeinrichtungen TX1 bis TXn und Empfangseinrichtungen RX1 bis RXm mit einer breiten Abstrahlcharakteristik realisiert werden.

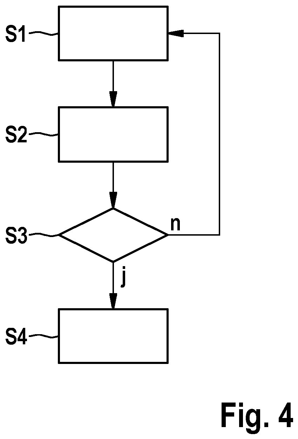

In Figur 4 ist ein Flussdiagramm eines Verfahrens zum Betreiben einer Radarvorrichtung 1 illustriert, welche gemäß einer der oben beschriebenen Ausführungsformen ausgestaltet ist.

Hierzu werden in einem ersten Verfahrensschritt S1 jeweils ein erstes Paar von einer Sendeeinrichtung TX1 bis TXn und einer Empfängereinrichtung RX1 bis RXm der Radarvorrichtung 1 und ein zweites Paar von einer Sendeeinrichtung TX1 bis TXn und einer Empfängereinrichtung RX1 bis RXm angesteuert, wobei ein virtuelles Element, welches dem ersten Paar zugeordnet ist, dieselbe horizontale Position und eine unterschiedliche vertikale Position aufweist, wie ein virtuelles Element, welches dem zweiten Paar zugeordnet ist.

Dadurch kann nach dem oben beschriebenen Vorgehen in einem zweiten Verfahrensschritt S2 der Phasenversatz zwischen der Sendeeinrichtung TX1 bis TXn des ersten Paars und der Sendeeinrichtung TX1 bis TXn des zweiten Paars ermittelt werden.

In einem Verfahrensschritt S3 wird überprüft, ob bereits sämtliche Kombinationen derartiger Paare überprüft wurden. Ist dies nicht der Fall, werden die Schritte S1 und S2 für eine weitere Kombination derartiger Paare wiederholt.

Andernfalls wird in einem Verfahrensschritt S4 durch Kompensieren der Phasenversätze Phasengleichlauf erzielt.


**Patentansprüche**

1. Radarvorrichtung (1), mit:

   einer Vielzahl von Sendeeinrichtungen (TXi), welche dazu ausgebildet sind, Radarwellen auszusenden;
   einer Vielzahl von Empfängereinrichtungen (RXi), welche dazu ausgebildet sind, die reflektierten Radarwellen zu empfangen und ein jeweiliges Radarsignal auszugeben, wobei die Sendeeinrichtungen (TXi) und Empfängereinrichtungen (RXi) derart in einem Array (7) mit horizontalen Zeilen und vertikalen Spalten angeordnet sind, dass in einem entsprechenden virtuellen Array (8) ein Teilarray (10, 20, 30), welches einer beliebigen ersten Sendeeinrichtung (TXi) zugeordnet ist, mindestens ein erstes virtuelles Element aufweist, welches dieselbe horizontale Position und eine unterschiedliche vertikale Position aufweist wie mindestens ein zugeordnetes zweites virtuelles Element eines weiteren Teilarrays (10, 20, 30), welches einer zweiten Sendeeinrichtung (TXi) zugeordnet ist, wobei dem ersten virtuellen Element eine erste Empfängereinrichtung (RXi) zugeordnet ist, und
   wobei dem zweiten virtuellen Element eine zweite Empfängereinrichtung (RXi) zugeordnet ist; und
   einer Steuereinrichtung (4), **dadurch gekennzeichnet, dass** die Steuereinrichtung (4) dazu ausgebildet ist, für eine beliebige erste Sendeeinrichtung (TXi) einen Phasenversatz zur entsprechenden zweiten Sendeeinrichtung (TXi) zu bestimmen, unter Verwendung eines ersten Radarsignals, welches einer von der ersten Sendeeinrichtung (TXi) ausgesendeten und von der zugeordneten ersten Empfängereinrichtung (RXi) empfangenen ersten Radarwelle entspricht, und eines zweiten Radarsignals, welches einer von der zweiten Sendeeinrichtung (TXi) ausgesendeten und von der zugeordneten zweiten Empfängereinrichtung (RXi) empfangen zweiten Radarwelle entspricht.

2. Radarvorrichtung (1) nach Anspruch 1, wobei die Steuereinrichtung (4) weiter dazu ausgebildet ist, anhand der bestimmten Phasenversätze zwischen zwei Sendeeinrichtungen (TXi) die Sendeeinrichtungen (TXi) derart anzusteuern, dass Phasengleichlauf erzielt wird.

3. Radarvorrichtung (1) nach Anspruch 1 oder 2, weiter mit einer Auswerteeinrichtung (6), welche dazu ausgebildet ist, anhand der von den Empfängereinrichtungen (RXi) ausgegebenen Radarsignale ein Objekt zu detektieren und einen Azimutwinkel und/oder Elevationswinkel des Objekts zu ermitteln.

4. Radarvorrichtung (1) nach einem der vorangehenden Ansprüche, wobei die Steuereinrichtung (4) weiter dazu ausgebildet ist, den Phasenversatz zwischen zwei Sendeeinrichtungen (TXi) weiter unter Verwendung eines vertikalen Dejustagewinkels der Radarvorrichtung (1) zu bestimmen.

5. Radarvorrichtung (1) nach Anspruch 4, weiter mit einem Beschleunigungssensor, (5) welcher dazu ausgebildet ist, eine Beschleunigung der Radarvorrichtung (1) zu messen, wobei die Steuereinrichtung (4) dazu ausgebildet ist, den vertikalen Dejustagewinkel der Radarvorrichtung (1) unter Verwendung der gemessenen Beschleunigung zu bestimmen.

**6.** Radarvorrichtung (1) nach einem der vorangehenden Ansprüche, wobei die Steuereinrichtung (4) weiter dazu ausgebildet ist, den Phasenversatz zwischen zwei Sendeeinrichtungen (TXi) unter Verwendung eines Phasenversatzes zwischen den zwei zugeordneten Empfängereinrichtungen (RXi) zu bestimmen.

**7.** Radarvorrichtung (1) nach einem der vorangehenden Ansprüche, wobei die Steuereinrichtung (4) dazu ausgebildet ist, die Sendeeinrichtungen (TXi) und Empfängereinrichtungen (RXi) in einem Zeitmultiplex-Verfahren anzusteuern.

**8.** Radarvorrichtung (1) nach einem der vorangehenden Ansprüche, wobei sich die vertikalen Positionen der Sendeeinrichtungen (TXi) zumindest teilweise unterscheiden, und wobei sich die vertikalen Positionen der Empfängereinrichtungen (RXi) zumindest teilweise unterscheiden.

**9.** Verfahren zum Betreiben einer Radarvorrichtung (1) nach einem der vorangehenden Ansprüche, wobei für eine beliebige erste Sendeeinrichtung (TXi) ein Phasenversatz zur entsprechenden zweiten Sendeeinrichtung (TXi) bestimmt wird.

**10.** Verfahren nach Anspruch 9, wobei anhand der bestimmten Phasenversätze zwischen zwei Sendeeinrichtungen (TXi) die Sendeeinrichtungen (TXi) derart angesteuert werden, dass Phasengleichlauf erzielt wird.

**Claims**

**1.** Radar apparatus (1), having:

a plurality of transmitter units (TXi), which are designed to emit radar waves;
a plurality of receiver units (RXi), which are designed to receive the reflected radar waves and output a respective radar signal, wherein the transmitter units (TXi) and receiver units (RXi) are arranged in an array (7) having horizontal lines and vertical columns in such a way that, in a corresponding virtual array (8), a partial array (10, 20, 30), which is associated with an arbitrary first transmitter unit (TXi), comprises at least one first virtual element, which has the same horizontal position and a different vertical position as at least one associated second virtual element of a further partial array (10, 20, 30), which is associated with a second transmitter unit (TXi), wherein a first receiver unit (RXi) is associated with the first virtual element, and wherein a second receiver unit (RXi) is associated with the second virtual element; and
a control unit (4), **characterized in that** the control unit (4) is designed, for an arbitrary first transmitter unit (TXi), to determine a phase offset to the corresponding second transmitter unit (TXi), using a first radar signal, which corresponds to a first radar wave emitted by the first transmitter unit (TXi) and received by the associated first receiver unit (RXi), and a second radar signal, which corresponds to a second radar wave emitted by the second transmitter unit (TXi) and received by the associated second receiver unit (RXi).

**2.** Radar apparatus (1) according to Claim 1, wherein the control unit (4) is furthermore designed, on the basis of the determined phase offsets between two transmitter units (TXi), to activate the transmitter units (TXi) so that phase synchronization is achieved.

**3.** Radar apparatus (1) according to Claim 1 or 2, furthermore having an evaluation unit (6), which is designed to detect an object and to ascertain an azimuth angle and/or elevation angle of the object on the basis of the radar signals output by the receiver units (RXi).

**4.** Radar apparatus (1) according to any one of the preceding claims, wherein the control unit (4) is furthermore designed to determine the phase offset between two transmitter units (TXi) furthermore using a vertical misalignment angle of the radar apparatus (1) .

**5.** Radar apparatus (1) according to Claim 4, furthermore having an acceleration sensor (5), which is designed to measure an acceleration of the radar apparatus (1), wherein the control unit (4) is designed to determine the vertical misalignment angle of the radar apparatus (1) using the measured acceleration.

**6.** Radar apparatus (1) according to any one of the preceding claims, wherein the control unit (4) is furthermore designed to determine the phase offset between two transmitter units (TXi) using a phase offset between the two associated receiver units (RXi).

**7.** Radar apparatus (1) according to any one of the preceding claims, wherein the control unit (4) is designed to activate the transmitter units (TXi) and receiver units (RXi) in a time multiplexing method.

**8.** Radar apparatus (1) according to any one of the preceding claims, wherein the vertical positions of the transmitter units (TXi) at least partially differ, and wherein the vertical positions of the receiver units (RXi) at least partially differ.

9. Method for operating a radar apparatus (1) according to any one of the preceding claims, wherein, for an arbitrary first transmitter unit (TXi), a phase offset in relation to the corresponding second transmitter unit (TXi) is determined.

10. Method according to Claim 9, wherein, on the basis of the determined phase offsets between two transmitter units (TXi), the transmitter units (TXi) are activated in such a way that phase synchronization is achieved.

**Revendications**

1. Dispositif radar (1), comprenant :

une pluralité de dispositifs d'émission (TXi) qui sont réalisés pour émettre des ondes radar ; une pluralité de dispositifs de réception (RXi) qui sont réalisés pour recevoir les ondes radar réfléchies et pour sortir un signal radar respectif, les dispositifs d'émission (TXi) et les dispositifs de réception (RXi) étant disposés dans une matrice (7) avec des rangées horizontales et des colonnes verticales de telle sorte que dans une matrice virtuelle correspondante (8), une matrice partielle (10, 20, 30) qui est associée à un premier dispositif d'émission (TXi) quelconque présente au moins un premier élément virtuel qui présente la même position horizontale et une position verticale différente qu'au moins un deuxième élément virtuel associé d'une autre matrice partielle (10, 20, 30) qui est associée à un deuxième dispositif d'émission (TXi), le premier élément virtuel étant associé à un premier dispositif de réception (RXi), et le deuxième élément virtuel étant associé à un deuxième dispositif de réception (RXi) ; et un dispositif de commande (4), **caractérisé en ce que** le dispositif de commande (4) est réalisé pour déterminer pour un premier dispositif d'émission (TXi) quelconque un déphasage par rapport au deuxième dispositif d'émission correspondant (TXi) en utilisant un premier signal radar qui correspond à une première onde radar émise par le premier dispositif d'émission (TXi) et reçue par le premier dispositif de réception (RXi) associé, et un deuxième signal radar qui correspond à une deuxième onde radar émise par le deuxième dispositif d'émission (TXi) et reçue par le deuxième dispositif de réception (RXi) associé.

2. Dispositif radar (1) selon la revendication 1, dans lequel le dispositif de commande (4) est en outre réalisé pour piloter les dispositifs d'émission (TXi) à l'aide des déphasages déterminés entre deux dispositifs d'émission (TXi) de façon à obtenir une synchronisation des phases.

3. Dispositif radar (1) selon la revendication 1 ou 2, comprenant en outre un dispositif d'évaluation (6) qui est réalisé pour détecter un objet à l'aide des signaux radar émis par les dispositifs de réception (RXi) et pour établir un angle azimutal et/ou un angle d'élévation de l'objet.

4. Dispositif radar (1) selon l'une quelconque des revendications précédentes, dans lequel le dispositif de commande (4) est en outre réalisé pour déterminer le déphasage entre deux dispositifs d'émission (TXi) en outre en utilisant un angle de désajustement vertical du dispositif radar (1).

5. Dispositif radar (1) selon la revendication 4, comprenant en outre un capteur d'accélération (5) qui est réalisé pour mesurer une accélération du dispositif radar (1), le dispositif de commande (4) étant réalisé pour déterminer l'angle de désajustement vertical du dispositif radar (1) en utilisant l'accélération mesurée.

6. Dispositif radar (1) selon l'une quelconque des revendications précédentes, dans lequel le dispositif de commande (4) est en outre réalisé pour déterminer le déphasage entre deux dispositifs d'émission (TXi) en utilisant un déphasage entre les deux dispositifs de réception (RXi) associés.

7. Dispositif radar (1) selon l'une quelconque des revendications précédentes, dans lequel le dispositif de commande (4) est réalisé pour piloter les dispositifs d'émission (TXi) et les dispositifs de réception (RXi) dans un procédé de multiplexage temporel.

8. Dispositif radar (1) selon l'une quelconque des revendications précédentes, dans lequel les positions verticales des dispositifs d'émission (TXi) sont au moins partiellement différentes, et les positions verticales des dispositifs de réception (RXi) sont au moins partiellement différentes.

9. Procédé d'exploitation d'un dispositif radar (1) selon l'une quelconque des revendications précédentes, dans lequel, pour un premier dispositif d'émission (TXi) quelconque, un déphasage par rapport au deuxième dispositif d'émission (TXi) correspondant est déterminé.

10. Procédé selon la revendication 9, dans lequel les déphasages déterminés entre deux dispositifs d'émission (TXi) permettent de piloter les dispositifs d'émission (TXi) de telle sorte qu'une synchronisation des phases est obtenue.

Fig. 1

Fig. 2

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20170131392 A1

- DE 102014219113 A1